# EUROPEAN PATENT APPLICATION

(11) **EP 2 703 645 A1**
(43) Date of publication of application: **05.03.2014**
(21) Application number: 11777303.6
(22) Date of filing: 27.04.2011
(51) Int. Cl.: F03G 7/10, F03G 3/08, F16F 15/315

(54) **KINETIC ENERGY ELECTRICAL GENERATOR**

(71) Applicant: Fernandez Arcos, Manuel, 08190 Sant Cugat del Vallés (Barcelona) (ES)
(72) Inventor: Fernandez Arcos, Manuel, 08190 Sant Cugat del Vallés (Barcelona) (ES)
(74) Representative: Lahidalga de Careaga, Jose Luis
(86) International application number: PCT/ES2011/000143
(87) International publication number: WO 2011/138480

(57) **Abstract**

The invention relates to an electrical generator for generating electrical energy from the kinetic energy associated with a rotating body, designed in the form of a heavy wheel. The generator includes a vertical cylindrical container housing a rotor float supported by a central attachment and a quantity of liquid in the space between the container and the rotor float. The rotor float includes a cover from which bars made from metal or another heavy metal extend, the ends of which bars support a circular ring bearing a non-slip band acted on by electric propulsion motors. In addition, a drive device, such as a ring gear, is associated with the cover and a toothed wheel is meshed therewith, said toothed wheel being associated with the rotation axle of an electrical generator. Optionally, the container/rotor float assembly can include a horizontal positioning axle.

## Description

### Object of the invention

This invention refers to a kinetic energy electric generator able to produce electrical power from the kinetic energy of all bodies in movement, contemplating the use of a floating hollow housing which bear metal bars like the spokes of a wheel which, in turn, sustain a heavy peripheral circular metal crown driven by motors at a determined speed to extract the kinetic energy from these bodies, transferring it to an electric generator near the shaft of this large metal wheel.

The field of application of the invention is in the industrial sector dedicated to designing and building power generating devices.

### Background and Summary of the Invention

One of the current technological challenges is to obtain electrical power using non-pollutant systems and methods. The best-known and most-used non-pollutant systems are wind and water, where the energy of a fluid in movement is transformed to drive the blades of a generator.

Use of hydro power to provide said drive demands in most cases construction of a dam on a river or current of water so that it accumulates until reaching a significant level, rotating a turbine on falling from a certain height.

There is major environmental impact involved in the construction of these dams as, in most cases, the rear end of the reservoir floods fertile valleys and towns.

Use of wind power to drive generators means towers have to be built in windy areas to support wind turbines and their long blades. For these wind turbines to be economical they must be located strategically on high ground, making it hard to ignore them in environmental terms.

In the light of the foregoing, this invention proposes as its main purpose to develop a kinetic energy electric generator to positively overcome the drawbacks in the aforementioned existing systems. Thus the electrical generator the subject of this invention comprises a cylindrical receptacle freely housing a hollow body which is also cylindrical, closed at the bottom and with a top cover carrying strong metal bars like the spokes of a wheel, able to bear the weight of the peripheral crown to which they are attached.

The diameter of the hollow body is slightly less than the inside diameter of the receptacle, forming a cavity between the body and receptacle which contains sufficient quantity of liquid to allow the hollow body to float and to rotate horizontally when driven by an external thrust. The relation between said diameters is very similar so that a large amount of water or other fluid will not be necessary to keep the body afloat. The hollow body and receptacle assembly (floater-rotor and container) are identified hereinafter as the "turbine", this assembly of elements making use of the principles of Archimedes and Pascal, employing a vertical shaft, although a shaft positioned horizontally may also be used, as commented on below in relation to a second form of design shown graphically in the drawings, although that design is costlier and more complicated because construction is vertical rather than horizontal.

The fact that the hollow body (floater-rotor) is floating enables it to turn easily, with minimum effort, friction virtually at zero, enabling much better use to be made of the energy which would otherwise be lost using conventional bearings because of the very heavy weights which have to be supported.

According to the invention, both the outside receptacle (container) and the hollow body (floater-rotor) are made of concrete, iron or some other heavy material to ensure high mechanical resistance on the one hand and, on the other, to give the hollow body very high inertia once it begins to turn, driven by the force produced by motors with pneumatic wheels located opposite the ends of the metal bars and in contact with the peripheral circular crown. A more powerful motor may also be used although in the preferred embodiment use of three motors is preferred located on planes such as to also act as stabilisers to prevent the rotor from rocking.

According to the invention, the base of the outside receptacle (container) has an axial extension, like a shaft, which enters the hollow interior of an axial extension on the base of the floating hollow body (floater-rotor).

The outside receptacle (container) has two openings on its side surface, the top one for filling and the bottom one for emptying, both openings with elements to close them, to allow the water to be added which is needed to keep the hollow body (floater-rotor) afloat, or for emptying.

Because the water in the external receptacle (container) will slowly evaporate, there is provision for a level sensor for that receptacle with an indicator visible from the outside, optionally with a graduated scale or markings to indicate the level of water necessary to ensure that the generator functions correctly.

The top of the hollow body (floater-rotor) is covered by a circular metal plate made of concrete or any other resistant material where metal or concrete bars are also secured, and which extend radially. Said bars or beams shall be as long as possible so that the energy received on the rotating turbine shaft is also the largest possible.

These bars secure a circular crown located on the outside or the periphery so that the whole is like a large wheel, the bars as its spokes. Because the weight of the materials is of the very greatest importance for kinetic energy, said crown is designed to be as heavy as possible, with a perimeter band of asphalt, concrete, rubber or any non-slip material attached on the outside, to give grip to the pneumatic wheels installed in the motors so that they rotate the large wheel at sufficient speed to cause the asynchronous electric generator to function.

In general, any conventional electric generator can be used, but the asynchronous, "squirrel cage" type is preferred, with a gear wheel installed on its shaft, connecting with a crown, which is also geared, forming a part of the hollow body (floater-rotor), this sort of generator considered ideal for a preferred embodiment of the invention because it runs like a motor at a determined number of r/min.

In an alternative version, the generator may be connected to a movement multiplier joined in turn to a cylindrical transmission bar forming a unit with the rotor in its centre and running through the container's hollow shaft.

### Brief Description of the Drawings.

To complement this description and for a better understanding of the features of the invention, a series of drawings is attached to these specifications, showing the following by way of illustration and without limitation:

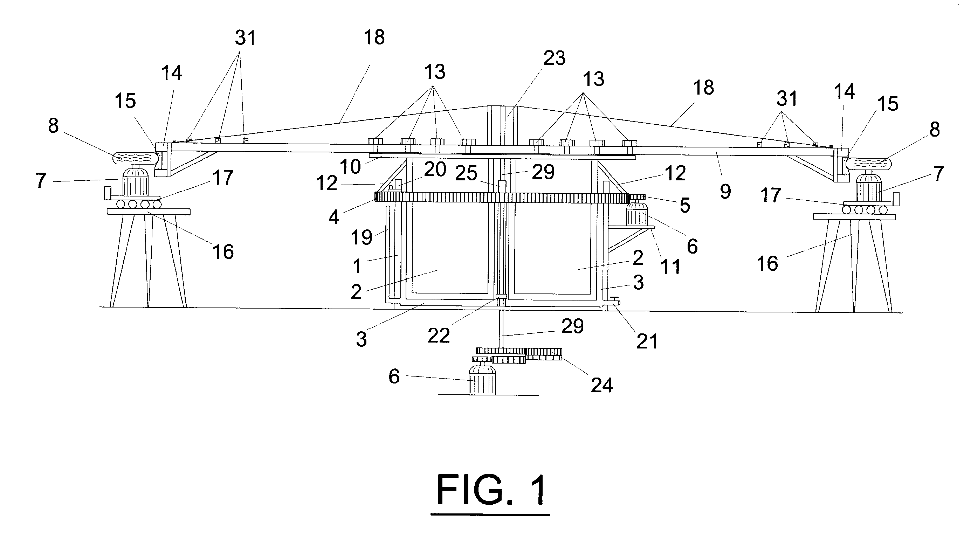

Figure 1 is a lateral elevated diagrammatic view of the kinetic energy generator which is the subject of the invention designed with a vertical shaft, divided along the vertical plane, with the squirrel cage electric generator coupled and the drive motors installed on the periphery, in operation:

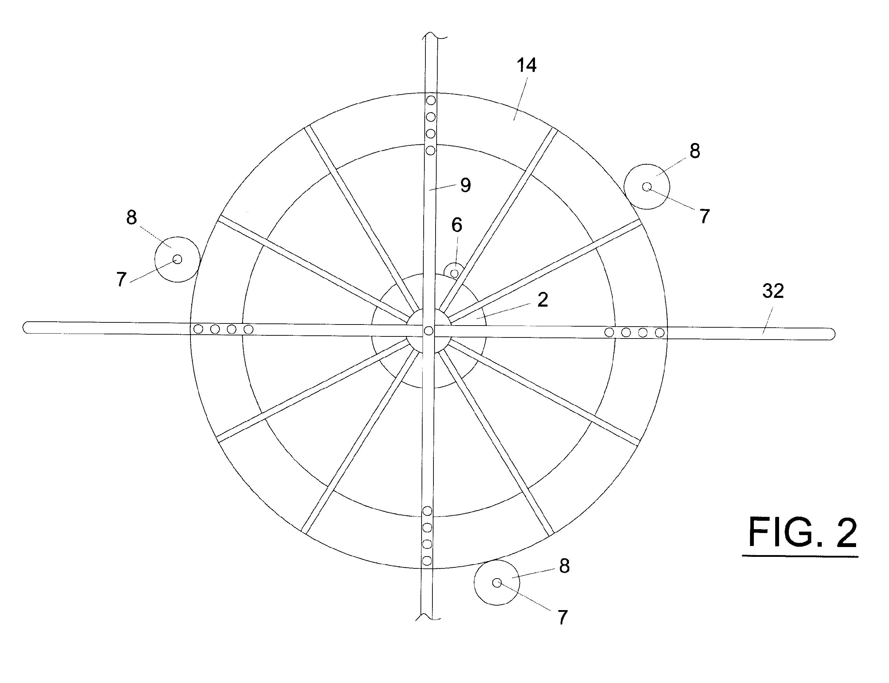

Figure 2 is a ground plan view of the kinetic energy electric generator in Figure 1, in operation;

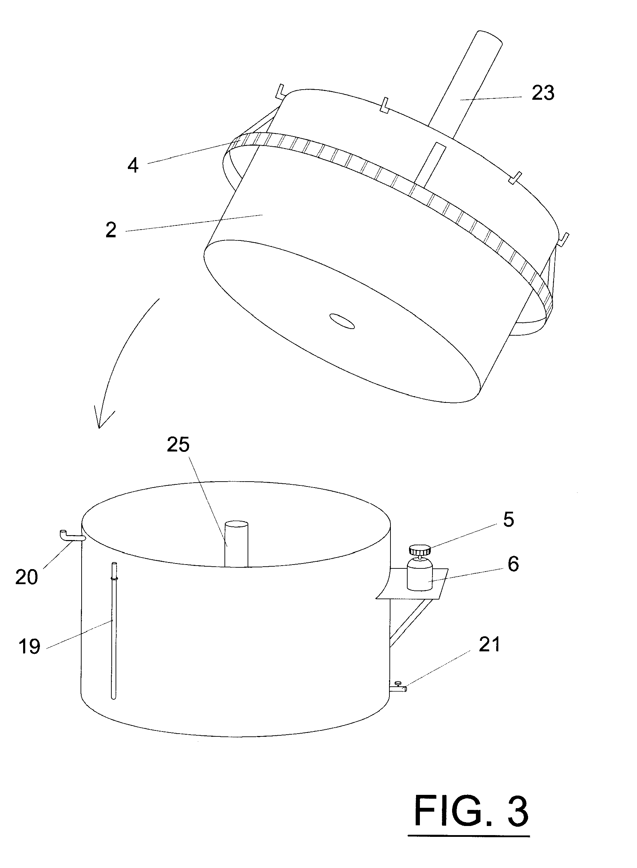

Figure 3 is a descriptive plan of the set of elements of the floater-rotor and the fluid container making up the kinetic energy electric generator turbine in this invention;
Figure 4 is a sectioned plan of a design of the kinetic energy electric generator with a horizontal shaft, and
Figure 5 shows a section of the floater-rotor used by the horizontal-shaft kinetic energy electric generator in Figure 4.

### Description of a Preferred Embodiment

As seen in the foregoing Figures briefly discussed, the kinetic energy electric generator in this invention consists of a cylindrical receptacle 1 housing a hollow body 2 and sufficient water 3 to ensure that said hollow body 2 can float.

At its base, the receptacle 1 has an axial extension 25 housed in a tubular axial extension 23 on the hollow body 2.

Between extensions 25 and 23, there is a stainless steel bearing 22 to dampen any rocking by the hollow body 2 when it turns driven by motors 7 on the periphery of the wheel assembly.

The hollow body 2 is closed at the top by a cover 10 to which metal bars 9 are secured using screws 13 threaded into said cover. Said bars are as long as possible and made of concrete or other resistant material and, at their ends, carry a heavy circular crown 14 designed to provided deliver torque to an electric generator 6 preferably of the squirrel cage type, through a geared crown 4 forming a part of the floater-rotor 2 with bracing towing arms 12 into which a geared wheel 5 meshes which is joined to the rotating shaft of said electric generator 6. The rotating assembly is driven by the action of motors 7 installed on supports 17 resting on tripods 16 on the periphery and in contact with an asphalt band 15 inside said circular peripheral crown 14, each aided by elastic wheels 8, preferably pneumatic, to make the work of the kinetic energy from the rotation significant. Optionally, instead of an asphalt band 15, to prevent slipping, a geared crown might be used. Also optionally, if the construction characteristics of the installation make it advisable, stays 18 may be used to brace the bars 9, extended between the upper end of extension 23 and moorings provided for the free ends of each of said radial bars 9.

The electric motor 6 is secured on a support 11 forming a part of the external surface of the cylindrical container 1 at a suitable height for the geared wheel 5 to mesh with said geared crown 4.

The length of the bars 9 may be extended optionally by fitting complementary bars 32 from the peripheral circular crown 14 and attached to threaded extensions 31 arranged for the purposes on said bars 9 thereby considerably increasing the kinetic energy. For the floater-rotor 2 to carry a greater weight, the water 3 may be replaced optionally by a denser fluid.

The cage type electric generator 6 may also optionally be connected to a movement multiplier 24 rather than to the geared crown 4, itself in turn connected to a transmission bar 29 linked to the floater-rotor 2 running through a hollow shaft 24 in the container 1.

The hollow body 2 is, although made of concrete, iron or some other heavy material, able to turn easily with minimum effort while floating in the water 3 as if it were a boat.

To ensure that the water level 3 inside receptacle 1 guarantees that body 2 floats, said receptacle incorporates an opening 20 for filling and an opening 21 for emptying, and the level of the water 3 in the receptacle 1 is monitored with a level indicator 19.

The weight to be borne by the turbine is calculated (using Archimedes' principle) according to the size of the hollow body 2: for example, the volume of a hollow body 2 which is 4 m in diameter and 1 m high is in excess of 12,000 dm³, equalling a volume of water 3 weighing more than 12,000 kg which could be housed in said hollow body 2.

This kinetic energy generator functions as follows: an initial force starts the motors 7 driving the peripheral circular crown 14 and to magnetise the poles of the asynchronous electric generator 6 in a squirrel cage, such force taken from the electrical mains or an independent diesel- or petrol-driven or other generator. The revolutions per minute of the motors 7 exceed those of the electric generator 6 but with less power than said generator 6, as said motors 7 which are in contact with the circular crown 14 subject it to sufficient speed to move the rotor of the electric generator 6 and for it to generate electricity rather than consuming it. The high mass of the crown 14 at the end of the bars 9 creates high torque at the level of the electric generator 6 which it will transform into electricity at a level above that consumed by the drive motors 7 so that, once the kinetic energy generator is running, the drive motors can be supplied with the excess energy produced by electric generator 6 and so indefinitely run autonomously.

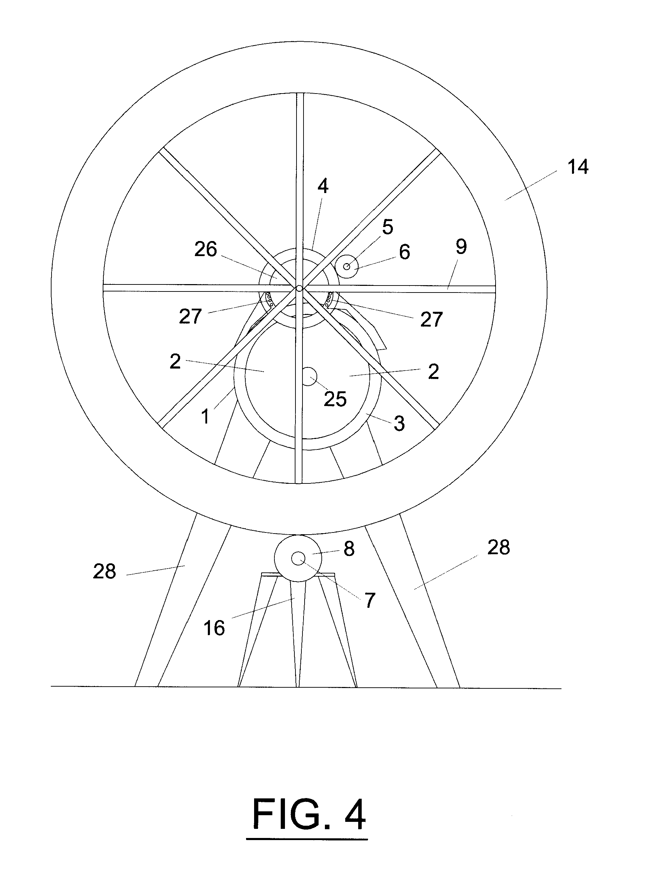

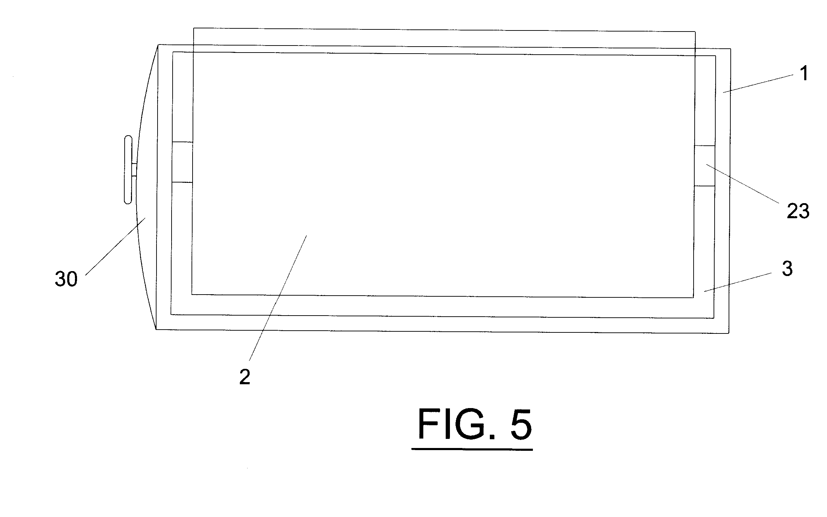

This same hydraulic system can used, applying the principle of Archimedes and Pascal, but with a horizontal shaft, as shown in Figures 4 and 5. Here, the container 1 consists of a horizontal hollow cylinder, closed on one side and with a gate 30 on the other side, of the submarine-hatch type so that, once the liquid is closed off, it cannot escape from the receptacle which will be open at the top where part of the floater-rotor 2 protrudes.

The floater-rotor 2 consists of a hermetically sealed hollow cylinder whose diameter is slightly less than that of the container 1 housing it so that there is sufficient liquid between the two to ensure flotation. At the top rear, there is an extension 23 in the centre acting as a shaft and housed in grooves located in the back of the container 1 and in the hatch-type gate 30. The part of the floater-rotor 2 which protrudes through the open top of container 1 must be able to bear a weight equal to the amount of liquid which would fit inside, and turn it with minimum force.

## Claims

1. A kinetic energy electric generator, particularly a generator with capacity to transform the kinetic energy of a heavy body impelled by a rotary movement, characterised because it comprises a vertical cylindrical receptacle (1); a hollow body (2) closed at its inside base, housed in the cylindrical receptacle (1) and able to rotate on its vertical axis, and whose dimensions leave a space from the receptacle which is thus able to contain sufficient quantity of liquid (3) between the two to ensure that the hollow body (2) floats; a cover (10) to close off the top of the hollow body (2), a multiplicity of metal or other heavy material bars (9) as long as possible and secured to the cover (10) with threaded screws (13) and from where they extend radially outward; a heavy circular crown (14) attached to the ends of each metal bar (9); a non-slip asphalt band (15) in the space inside the heavy circular crown (14); an asynchronous electric generator (6), preferably of the squirrel-cage type on whose shaft there is a geared wheel (5) meshing with a geared crown (4) supported and moved by said cover (10) of the floater-rotor (2) by supporting and bracing arms (12); and motors (7) opposite the periphery of said circular crown (14) fitted with elastic pneumatic wheels (8) supported on the non-slip asphalt band (15) located inside the heavy circular crown (14).

2. A kinetic energy electric generator as set forth in claim 1 characterised because said motors (7) are of less power than the electric generator (6) operate at more revolutions per minute so that the linear speed of the pneumatic wheels (8) is calculated at a value above the linear speed of the heavy circular crown (14) with which it is in contact, thereby causing thrust on the high mass of said heavy circular crown (14) and so creating kinetic energy which is collected and transformed by the electric squirrel-cage generator (6) into sufficient quantity of electrical energy to feed the electric motors (7), obtaining a surplus which can be delivered to the electrical mains or used for consumption at any point inside or outside the system.

3. A kinetic energy electric generator as set forth in claim 1 characterised because, to increase the rotation inertia of the entire assembly, the bars (9) may optionally be lengthened by adding other bars (32) fixed to threaded extensions (31) located close to the ends of said bars (9).

4. A kinetic energy electric generator as set forth in claims 1 to 3 characterised because the anti-slip band (15) may optionally consist of a geared crown.

5. A kinetic energy electric generator as set forth in claims 1 to 4 characterised because the electric generator (6) may optionally be coupled to a movement multiplier (24).

6. A kinetic energy electric generator as set forth in one or more of claims 1 to 5 characterised because an alternative design comprises a container (1) consisting of a hollow body whose shaft is positioned horizontally, closed front and back and with a gate (30) at one end of the cylinder, and open at the top where part of the upper section of a floater-rotor (2) housed inside protrudes, floating and able to rotate on a horizontal axis thanks to appendages (23) on said floater-rotor (2) which act like a shaft, able to float in a fluid in the space between the container (1) and the floater (2), rotating with minimal effort.
